# EUROPEAN PATENT SPECIFICATION

(11) **EP 3 752 936 B1**
(45) Date of publication and mention of the grant of the patent: **29.12.2021**
(21) Application number: 19714493.4
(22) Date of filing: 13.02.2019
(51) Int. Cl.: G06F 21/32, G06F 21/42, G06F 21/34

(54) **IDENTITY AUTHENTICATION PROCESS/METHOD BY SENDING AND EXCHANGING A TEMPORARY PERSONAL PASSWORD AMONG AT LEAST FOUR ELECTRONIC DEVICES FOR RECHARGES, PAYMENTS, ACCESSES AND/OR IDS OF THE OWNER OF A MOBILE DEVICE, SUCH AS A SMARTPHONE**
IDENTITÄTSAUTHENTIFIZIERUNGSPROZESS/-VERFAHREN DURCH SENDEN UND AUSTAUSCHEN EINES TEMPORÄREN PERSÖNLICHEN PASSWORTS UNTER MINDESTENS VIER ELEKTRONISCHEN VORRICHTUNGEN FÜR AUFLADUNGEN, ZAHLUNGEN, ZUGRIFFE UND/ODER IDENTIFIKATIONEN DES BESITZERS EINER MOBILEN VORRICHTUNG, WIE ETWA EINES SMARTPHONES
PROCESSUS/PROCÉDÉ DE D'AUTHENTIFICATION D'IDENTITÉ PAR ENVOI ET ÉCHANGE D'UN MOT DE PASSE PERSONNEL TEMPORAIRE PARMI AU MOINS QUATRE DISPOSITIFS ÉLECTRONIQUES DESTINÉ AUX RECHARGES, PAIEMENTS, ACCÈS ET/OU IDENTIFICATIONS DU PROPRIÉTAIRE D'UN DISPOSITIF MOBILE, TEL QU'UN TÉLÉPHONE INTELLIGENT

(30) Priority: 15.02.2018 IT 201800002681
(43) Date of publication of application: 23.12.2020
(73) Proprietor: Archimedetech S.r.l., 31100 Treviso (TV) (IT)
(72) Inventor: RIZZO, Andrea, 31100 Treviso (TV) (IT); GIRARDI, Sisto, 31053 Pieve di Soligo (TV) (IT); MORAO, Emanuele, 31050 Ponzano Veneto (TV) (IT)
(74) Representative: Burchielli, Riccardo
(86) International application number: PCT/IT2019/000008
(87) International publication number: WO 2019/159206

(56) References cited:
- WO-A1-2017/127871
- WO-A1-2017/152818
- US-B1- 8 752 146

## Description

The present invention refers to a process/method implemented by a strong security system for verifying the identity of a legitimate owner of a smartphone, tablet or other mobile device, said mobile device being coupled with a "smart device".

The system is useful for giving a prior "strong authentication" so as to perform sensitive activities, such as recharges of a financial instrument, mobile or remote payments, access to private properties or places or things with a prior access authorization and/or identifications of the owner of a mobile device for bureaucratic formalities; moreover, the system makes use of a software application (APP), which provides for sending and exchanging a user's temporary personal password, which can be used only once, among at least four electronic devices.

More particularly, the invention relates to a process/method for obtaining a security system comprising a smartphone, tablet or other mobile device, a secondary element or accessory item, such as a "smart device" (having an electronic circuit, a battery and a suitable firmware), a third electronic device, such as one or more remote networked servers, a fourth electronic device, which can be coupled or integrated into a POS device or an electronic lock or a PC desktop, and a software application (APP), which manages the process so as to make extremely safe the identity authentication of a owner of a smartphone, a tablet or another mobile device, in particular in case of loss, theft and fraudulent manipulation of the mobile device or in case of online hackers attacks during a mobile or remote recharge of a financial and/or payment instrument, as well as during an access to private properties or to places or things with prior access authorization (housing, means of transport, public or private offices, etc.) and/or during the identification steps of the owner of a mobile device for bureaucratic formalities.

The process is able to allow users of smartphones, tablets or other mobile devices to certify their identity with an absolute security, thanks to the use of a unique temporary personal password which is coupled with the owner of the smartphone, tablet or other mobile device and thanks to the use of a secondary element or accessory item, such as a "smart device", which is coupled with said mobile device (said "smart device" also being previously coupled with the owner of said mobile device); the unique temporary personal password is stored both on the mobile device and on the secondary element, as well as on one or more remote networked servers, and subsequently said password is sent by the server to a further electronic device which is coupled or integrated with the devices used for recharging the financial instrument, for mobile or remote payments, for access to private properties or to places or things with prior access authorization and/or for identifying the owner of a mobile device for bureaucratic formalities; said coupled electronic device is configured to verify if the temporary personal password which is stored in the remote server is equal to the password which is stored in the secondary element ("smart device").

Currently there are software applications (APP), in particular for mobile payments, which require entering additional codes or pin with respect to another pin (or to the reading of a fingerprint), as well as entering passwords (for example a numeric code and a user-name) for obtaining the authentication of a legitimate owner of a smartphone, tablet or other mobile device; said codes or pin are verified on-line by a server application, so as to obtain a reasonable level of security in case of loss, theft or fraudulent use of the smartphone, tablet or other mobile device by unknown third parties. Other authentication systems, which are able to confirm the legitimate owner of a mobile device, especially during mobile payment activities (by using software applications or APP) and which are usually provided by financial institutions, may also use a QR CODE, sent online from a server, or biometric data of the user, such as the heartbeat acquired with sensors placed on bracelets and/or smartwatches (such as iWatch^{®}, Gear^{®}, etc.), which are connected to the smartphone, tablet and/or other mobile device; further technological background can also be found in WO 2017/127871 A1, US 8 752 146 B1 and WO 2017/152818 A1; said systems, however, are not totally reliable and secure, as online transmissions can be stolen by hackers, while biometric data may be unreliable and/or falsified with photos and images.

In mobile payment processes, methods and processes which involve the exchange of money between the users of a smartphone by using social software applications (APP) or messenger applications, such as the "peer-to-peer" messenger application, are also known; in this case the amounts handled are usually limited, but it is necessary to enter sensitive data so that the owner of the mobile device can be authenticated (by means of a certification similar to the digital signature, for example) and it is also necessary to enter different codes or pin for obtaining a substantial security; moreover, all of said software applications (APP) store and track on the mobile device the sensitive data of the current account and/or the credit or debit card used by the owner of the smartphone, tablet or other mobile device.

The same applies to software applications (APP), which in the last period are also suitable for managing electronic locks or other accesses, but which do not provide any strong authentication system of the owner of said smartphone, tablet or other mobile device. Other methods and/or processes for obtaining a strong authentication of the owner of a smartphone, tablet or other mobile device, which are relatively safer than those highlighted above, provide for sending a series of encrypted unique identification codes together with the identification data of the owner of the mobile device, joined with the data related to a financial instrument and/or to an access electronic system for private properties or to places or things with prior authorization of access; all said data are stored on a separate device, such as a secondary element or accessory item, e.g. a passive or active TAG.

Even if said processes are able to guarantee a greater level of security in case of loss, theft or fraudulent use of the smartphone, tablet or other mobile device by third parties, there is still a real risk of possible theft of identification data of the mobile device owner and of data related to the financial instrument or to the access electronic system for private properties, in particular during transmitting and exchanging data or codes between the electronic devices for mobile payment procedures and/or for accesses to private properties, considering that said codes are fixed or created with an algorithm which an hacker may attack.

An object of the present invention is therefore to obviate the above-mentioned technical drawbacks and, in particular, to provide a process/method for obtaining a strong security and authentication system for the owner of a smartphone, tablet or other mobile device and for making totally safe the subsequent activities of recharging a financial instrument, mobile or remotely payments, accesses to private properties or to places or objects with prior authorization of access and/or identifying the real owner of a mobile device for bureaucratic formalities; practically, a system is used comprising at least four electronic devices: a first electronic device, such as a smartphone, tablet or other mobile device having a software application or APP, a second electronic device or secondary element, such as an accessory item like a "smart device", which is previously coupled with the owner of the smartphone, tablet or other mobile device, a third electronic device, such as one or more remote networked servers, and a fourth electronic device coupled with or integrated into other devices, such as a POS, an electronic lock or a PC desktop; according to the system, a user's temporary personal password, which is used only once, is sent among said four electronic devices.

A further object of the present invention is to allow the owner of the smartphone, tablet or other mobile device, to carry out subsequent activities in total safety, such as recharging own financial instruments and/or making mobile or remote payments and/or entering private properties or places or things with a prior authorization of access and/or identifying himself/herself as the real owner of a mobile device for bureaucratic formalities.

According to the present invention, a possible theft of the temporary personal password by third parties through tools such as a digital scanner or a "sniffer" or by hackers is in fact impossible because the temporary personal password of the invention changes from time to time and nobody is able to go back to rebuild said password, since said password is not entirely based on a given mathematical model.

Lastly, a further purpose of the present invention is to allow the owner of the smartphone, tablet or other mobile device to carry out, after having authenticated his/her identity thanks to the process/method which is the object of the present invention, recharging of a financial instrument and/or mobile or remotely payments and/or accesses to private properties or places or things of which it is necessary to have a prior authorization of access and/or identifying for bureaucratic formalities, with no need to enter a PIN or a QR Code or other codes for doing the operation. These and other objects, which more clearly will appear in the following, are achieved, according to the invention, by a method according to the claim 1. Advantageously, the system according to the invention includes:
- a smartphone, tablet or other mobile device, where an identification code (for example an ID code of the mobile device) is steadily stored and where a personal password is temporarily stored and where a software application (APP) also runs to manage communications between said mobile device, a secondary element or accessory item such as a smart device, a third electronic device such as one or more remote networked servers and a fourth electronic device, which is coupled with or integrated into other devices such as a POS, an electronic lock or a PC Desktop;
- a second electronic device or secondary element (an accessory item), such as a smart device, which is separated but inserted into an accessory for a personal use of the owner of said smartphone, tablet or other mobile device, said secondary element being previously coupled with the owner of the smartphone or other mobile device and having steadily stored an identification code (for example an ID code of the secondary element) and/or sensitive and identifying data of the user and owner of the mobile device, and, in an encrypted form, data referring to a financial instrument or to an access system and other personal data of said user and owner of the mobile device, as well as a temporary personal password (the secondary element also has a software application to manage technologies and/or data transmission protocols and/or other features);

- a third electronic device, such as one or more remote networked servers, which has a software application to manage data transmission technologies and/or protocols and various data-bases; said third electronic device has a stored temporary personal password and communicates either with the smartphone, tablet or other mobile device and with a fourth electronic device;
- a fourth electronic device, coupled with or integrated into other devices, such as a POS, an electronic lock, a PC Desktop, which has a software application to manage technologies and/or data transmission protocols and which communicates with the smartphone, the secondary element and the remote networked servers;
- a software application (APP) running on the smartphone, tablet or other mobile device, which manages the whole method/process.

Further features and advantages of the method for obtaining a safe authentication system of the legitimate owner of a smartphone, tablet or other mobile device, which can also be used to recharge a financial instrument, to provide for mobile or remote payments, to enter private properties or places or things with prior access authorization or to identify said owner of the mobile device for bureaucratic formalities, according to the present invention, will be more clear from the following description of various preferred embodiments and from the enclosed drawings, in which:
- Figure 1 shows the data flowing among the four electronic devices, wherein the start of the identity authentication procedure takes place by sending the user identification data, through the mobile device, which are detected by the fourth electronic device, according to the invention;
- Figure 2 shows the data flowing among the four electronic devices, wherein the start of the identity authentication procedure takes place starting from a request to the mobile device for sending the user's identification data coming from the fourth electronic device, according to the present invention;
- Figure 3 shows the data flowing among the four electronic devices, wherein the start of the identity authentication procedure takes place by sending an identification code from the fourth electronic device to the mobile device.

In a first embodiment of the present invention the following steps are provided:
a) the user, by means of the software application (APP) running in his/her mobile device, sends to the fourth electronic device, coupled with or integrated into other devices, such as a POS or an electronic lock or a PC Desktop, an identification code which may be the ID code of the mobile device and/or the tax code of the user and owner of said mobile device;
b) a reply of said fourth electronic device is performed by sending an identification code or ID code to the mobile device or to the secondary element (smart device); the fourth electronic device also allows starting the identity authentication procedure of the user and owner of said mobile device;
c) the software application (APP) running in the first mobile electronic device asks for said secondary element (smart device), which is already coupled with the mobile device, to create a temporary random code; said temporary random code may be created in different ways, such as, for example, through an algorithm and/or from biometric information, such as the heartbeats and/or the user's steps, which are detected by said secondary element. Moreover, the secondary element is configured to add the identification data of the user and owner of the mobile device (for example, the owner's tax code) to the temporary random code, together with other identification codes stored in said mobile device (for example, the codes related to a financial instrument or to an electronic lock to be accessed), thus automatically obtaining a partial password which is sent to the mobile device;
d) the software application (APP) running in the first mobile electronic device acquires from the secondary element the partial password to which the identification information (ID) of the mobile device is added, thus obtaining unambiguously a temporary personal password of the user, which is stored in the mobile device;
e) the software application (APP) running in the first mobile electronic device sends the temporary personal password of the user, thus obtained, to the secondary element, where is stored;
f) the software application (APP) running in the first mobile electronic device sends the temporary personal password of the user, thus obtained, to the third electronic device (networked remote server), where is stored;
g) the fourth electronic device (which is coupled with or integrated into a POS, electronic lock or PC Desktop) requests and acquires from the networked remote server the temporary personal password of the user, which is stored in said remote server;
h) the fourth electronic device is configured to verify that the temporary personal password of the user received from the networked remote server is the same password which is stored in the secondary element or in the mobile device; in practice, the fourth electronic device asks for the temporary personal password of the user to the secondary element or to the mobile device and is able to compare said personal password with the password received from the server so as to verify if said personal passwords are equal.

If said personal passwords are equal, the identity authentication will be verified, while, if said two passwords coming from the server and coming from the secondary element are not equal, the identity authentication of the owner of said mobile device is not verified and the subsequent activities (e.g. recharging of a financial instrument, mobile or remote payments, accesses to properties, places or things with prior authorization, identification of the owner for formalities bureaucracies) will be denied.

According to a second embodiment of the invention, the following steps are provided:
a) the fourth electronic device sends a request to said mobile device or to said secondary element (smart device) for having the user's identification code, which may correspond to the ID code of the mobile device or the ID code of the secondary element and/or the user's tax code and, at the same time, said fourth electronic device requires starting the identity authentication procedure of the user and owner of said mobile device;
b) the user, through the software application (APP) running in his/her mobile device, sends to the fourth electronic device, which is coupled with or integrated in a POS, an electronic lock or a PC Desktop, his/her identification code, which may correspond to the ID code of the mobile device or to the user's tax code;
c) the software application (APP) running in the first mobile electronic device sends a request to the secondary element, which is already coupled with the mobile device, to create a temporary random code; said temporary random code is created in different ways, such as, for example, through an algorithm and/or from biometric information, such as the heartbeats and/or the user's steps, detected by said secondary element; the secondary element adds the identification data of the user of said mobile electronic device (for example, his/her tax code) to the temporary random code, together with other identification codes stored in said mobile device (for example, codes related to a financial instrument or to an electronic lock to be accessed), thus automatically obtaining a partial password, which is sent to the mobile device;
d) the software application (APP) running in the first mobile electronic device acquires from the second electronic device said partial password to which the identification information (ID codes) of the mobile device are added, thus obtaining an unambiguous temporary personal password of the user, which is stored in the mobile device;
e) the software application (APP) running in said first mobile electronic device sends the temporary personal password of the user, thus obtained, to the second electronic device (secondary element or accessory item), where is stored;
f) the software application (APP) running in said first mobile electronic device sends the temporary personal password of the user, thus obtained, to the third electronic device (remote server), where is stored;
g) the fourth electronic device (which is coupled with or integrated into a POS, an electronic lock, a PC Desktop or another device) acquires from the networked remote server the temporary personal password of the user which is stored in said server;
h) the fourth electronic device verifies that the temporary personal password of the user which is received from the networked remote server is equal to the password which is stored in the secondary element and/or in the electronic mobile device; the fourth electronic device receives the temporary personal password of the user from the secondary element and/or from the mobile device and compares said password with the password received from the networked remote server to verify whether said passwords are equal. If said passwords are equal, a strong identity authentication is verified, while, if said passwords are not equal, said authentication is not verified and a subsequent activity, such as a recharging of a financial instrument, a mobile or remote payment, an access to properties, places or things with prior authorization of access and/or an identification of the owner of the mobile device for bureaucratic formalities, is denied.

According to a third embodiment of the invention, the following steps are performed:
a) the fourth electronic device sends to the mobile device or to the secondary element (smart device) an identification code or ID code and asks the user and owner of the mobile device to start the identity authentication process;
b) the software application (APP) running in the first mobile electronic device asks the secondary element, which is already coupled with the mobile device, to produce a temporary random code; said temporary random code may be produced in different ways, such as, for example, through an algorithm and/or starting from biometric information, such as the heartbeats and/or the user's steps, which are detected by said secondary element; the secondary element adds the identification data of the user and owner of the mobile electronic device (for example, his/her tax code) to the temporary random code together with other identification codes stored in said mobile device (said codes being linked, for example, to a financial instrument or to an electronic lock), thus automatically obtaining a partial password, which is sent to the mobile device;
c) the software application (APP) running in the first mobile electronic device receives the partial password from the second electronic device and adds to said partial password an identifying code (ID) of the mobile device, thus unambiguously obtaining a temporary personal password of the user which is stored in the mobile device;
d) the software application (APP) running in the first mobile electronic device sends the temporary personal password of the user, which is thus generated, to the secondary element, where said password is stored;
e) the software application (APP) running in the first mobile electronic device sends the temporary personal password of the user, thus generated, to the third electronic device (networked remote server), where the password is stored;
f) the fourth electronic device (which is coupled with or integrated into a POS, an electronic lock or a PC Desktop) acquires the temporary personal password of the user from the server;
g) the fourth electronic device verifies that the temporary personal password of the user received from the networked remote server is equal to the password which is stored in the secondary element and/or in the mobile device; therefore, the fourth electronic device asks the temporary personal password of the user to the secondary element and/or to the mobile device and compares said password with the password received from the server to verify a perfect equality. If the personal passwords received are equal, a strong identity authentication is verified, while, if the two personal passwords coming from the server and from the secondary element are not equal, the strong authentication of the identity is not verified and a subsequent activity, such as the recharging of a financial instrument, a mobile or remote payment, an access to properties, places or things with prior authorization of access and/or the identification of the owner of the mobile device for bureaucratic formalities, is denied. Since the above steps are verified by several electronic devices, a control chain for controlling the user's temporary personal passwords, which may also be encrypted, is obtained; this is a chain containing protected information which is similar to a decentralized block system (such as a "blockchain").

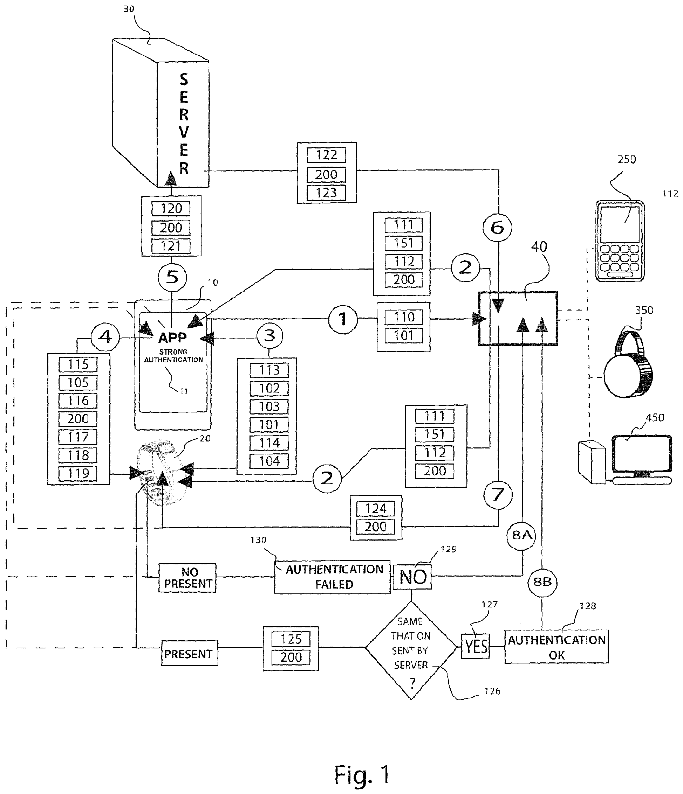

The enclosed figures 1, 2 and 3 show the process/method for obtaining a high security authentication system of the owner of a smartphone, tablet or another mobile electronic device, said system being configured to perform, according to the present invention, further activities, such as a recharging of a financial instrument, a mobile or remote payment, an access to private properties or places or things with prior authorization of access and/or the identification of the user or owner of a mobile electronic device for bureaucratic formalities; said method is performed to verify a user's temporary personal password, which is sent among at least four electronic devices.

According to a first embodiment of the invention, which is schematically shown in the attached fig. 1, the user and owner of the mobile device (10), such as a smartphone, by means of the software application or APP (11), is going to use said mobile device (10) for an activity such as a recharge of a financial instrument, a mobile or remote payment, an access to a private property or place or thing with prior authorization of access and/or an identification for bureaucratic formalities, and the user is able to provide for his/her identity authentication by sending (110) an identification code (101), which may be the ID of the mobile device or the user's tax code, to a fourth electronic device (40), which is coupled with or integrated into other devices, such as a POS (250), an electronic lock (350) or a PC Desktop PC or other devices (450). Said fourth electronic device (40) is able to reply to the mobile device (10) by sending (111) its own identification code or ID code (151) for starting a step of creating (112) a user's temporary personal password (200). Instantly, a secondary element or accessory item (20), which is constituted for example by an electronic bracelet or a smart device and where the univocal identification data of the user (101) and/or owner of the smartphone (10) (such as the data relating to the tax code) together with the data of the financial instrument or the codes of the electronic lock or sensitive identification data of the user are stored, produces (113) a temporary random code (102), for example by means of an algorithm or through an encoding generated by biometric information of the user detected by said secondary element (20), such as the user's steps or the heartbeat of the user. Said temporary random code (102) is coupled with an identification code or ID code (103) of said secondary element (20), so as to create a partial password (104), said partial password (104) being sent (114) by the secondary element (20) to the software application (11) running in the mobile device (10). The software application (11) running in said mobile device (10) provides to add (115) the identification data or ID code (105) of the mobile device (10) to the partial password (104), thus unambiguously obtaining (116) a temporary personal password of the user (200), which is stored (117) on said mobile device (10) and which is also sent (118) to the secondary element (20) and stored (119) in said secondary element (20). Once the mobile device (10) and the secondary element (20) have stored the user's temporary personal password (200), the software application (11) sends (120) to a third electronic device, consisting of one or more networked and/or remote servers (30), said temporary personal password of the user (200), which is stored (121) in said third electronic device (30). Said third electronic device (30) then sends (122) the user's temporary personal password (200) to the fourth electronic device (40) which is coupled with or integrated into a POS (250), an electronic lock (350) or a PC Desktop (450) and immediately said user's temporary personal password (200) is deleted (123). Later, the data contained in said fourth electronic device (40) are sent to said secondary element (20) and to said mobile device (10), while the data contained in said secondary element (20) and/or in said mobile device (10) are sent to the fourth electronic device (40). In particular, the fourth electronic device (40) requires (124) the temporary personal password (200) to the secondary element (20) and/or to the mobile device (10) and, if obtained (125), compares (126) the two temporary personal passwords (200), respectively coming from the server (30) and from the secondary element (20) and/or from the mobile device (10), to verify if said two passwords are equal. If said two passwords are equal (127), the system validates a certification and/or authentication of a strong identity (128) of the user of said mobile device (10), while, if said two passwords are not equal (129), the identity authentication is not validated (130) and the system is able to prevents any other activity, such as a recharge of a financial instrument, a mobile or remote payment, an access to a private property or a place or thing with prior authorization of access and/or a user's identification for bureaucratic formalities.

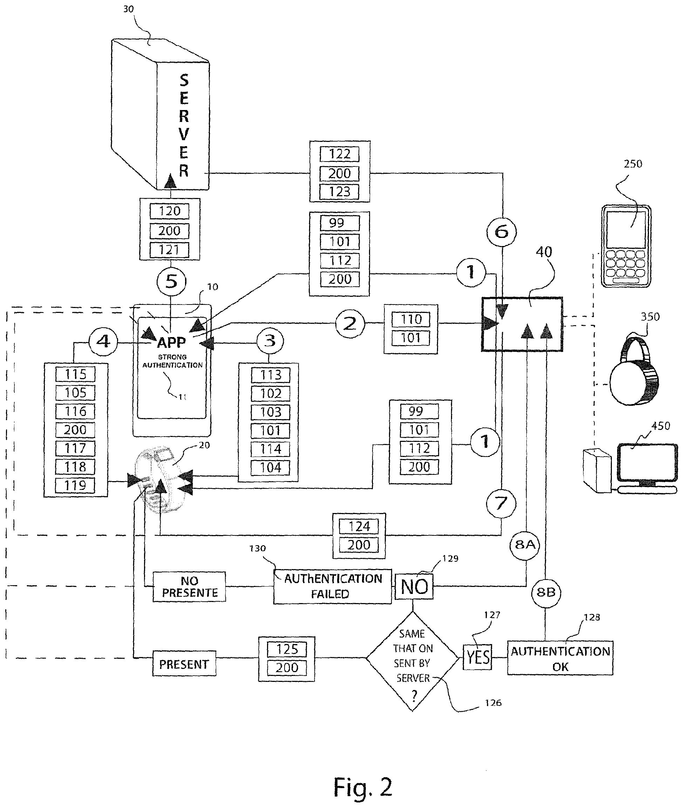

According to a second embodiment, of the present invention, which is schematically shown in fig. 2, the user and owner of the mobile device (10), who is going to use the mobile device (10) for an activity, such as, for example, a recharge of a financial instrument, a mobile or remote payment, an access to a private property or a place or thing with prior authorization of access and/or an identification phase for bureaucratic formalities, is identified by said fourth electronic device (40), which is coupled with or integrated into a POS (250), an electronic lock (350) or a PC Desktop or other devices (450). Said fourth electronic device (40) requires (99) to the mobile device (10) an identification code (101), which is constituted for example by the ID of the mobile device or by the user's tax code, and is able to start the identity authentication procedure by producing a user's temporary personal password (200). In particular, the user, through the software application (11) of the mobile device (10), sends an identification code (101) of the mobile device to said fourth electronic device (50) and instantly the secondary element or accessory item (20), constituted for example by an electronic bracelet or a smart device, where the univocal identification data of the user (101) and/or owner of the mobile device (10) (for example, relating to the tax code and coupled to the data of the financial instrument or to the codes of an electronic lock or to the user's identification data) are stored, produces (113) a temporary random code (102), for example through an algorithm or through an encoding generated by the user's biometric information detected from the secondary element (20), such as the user's steps or the heartbeat of the user. Said temporary random code (102) is coupled with the identification code or ID code (103) of the secondary element (20), thus obtaining a partial password (104) which is sent (114) to the software application (11) of the mobile device (10). The software application (11) of the mobile device (10) provides to add (115) the identification data or ID codes (105) of the mobile device (10) to the partial password (104), thus unambiguously obtaining (116) a temporary personal password of the user (200), which is stored (117) on said mobile device (10) and which is also sent (118) to the secondary element (20) and stored (119) in said secondary element (20). Once the mobile device (10) and the secondary element (20) have stored the user's temporary personal password (200), the software application (11) sends (120) to the third electronic device consisting of one or more remote and/or networked servers (30), the user's temporary personal password (200), which is stored (121) in said server. The same server (30) provides for sending (122) the user's temporary personal password (200) to the fourth electronic device (40) coupled with or integrated into a POS (250), an electronic lock (350) or a PC Desktop (450) and instantly said personal password (200) is deleted (123).

Finally, the fourth electronic device (40) sends its data to the secondary element (20) and/or to the mobile device (10) and receives data contained in said secondary element (20) and/or in said mobile device (10). In particular, the fourth electronic device (40) requires (124) the temporary personal password (200) to the secondary element (20) and/or to the mobile device (10) and, if obtained (125), compares (126) the two temporary personal passwords (200), respectively coming from the server (30) and from the secondary element (20) and/or from the mobile device (10), to verify if said two passwords are equal. If said two passwords are equal (127), the system is able to validate the certification and/or authentication of identity (128) of the user of said mobile device (10), while if said two passwords are not equal (129), the certification and/or authentication of identity is not validated (130) and the system will therefore prevent any other activities, such as, for example, a recharge of a financial instrument, a mobile or remote payment, an access to a private property or place or thing with prior authorization of access and/or an user's identification for bureaucratic formalities.

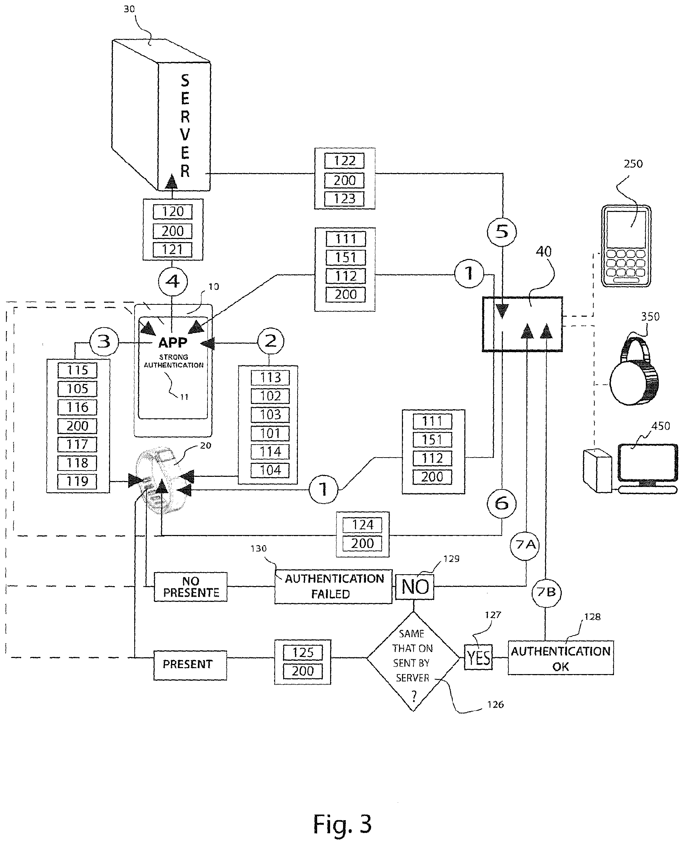

According to a third embodiment of the present invention, which is schematically shown in fig. 3, the user and owner of the mobile device (10), who is going to use said mobile device (10) for an activity such as for example a recharge of a financial instrument, a mobile or remote payment, an access to a private property or to a place or thing with prior authorization of access and/or an identification for bureaucratic formalities, is identified by the fourth electronic device (40), coupled with or integrated into a POS (250), an electronic lock (350) or a PC Desktop or other devices (450). In particular, said fourth electronic device (40) sends (111) an identification code or ID code (151) to the mobile device (10) for producing (112) a user's temporary personal password (200). Immediately thereafter, the secondary element or accessory item (20), which consists of an electronic bracelet or a smart device and where the unique identification data of the user (101) and/or owner of the mobile device (10), such as data relating to the tax code, coupled with the data of the financial instrument or the codes of the electronic lock or sensitive identification data of the user, are stored, is configured to produce (113) a temporary random code (102), for example through an algorithm or through an encoding generated by information user's biometrics detected by the secondary element (20), such as the user's steps or the heartbeat of said user. Said temporary random code (102) is coupled with the identification code or ID code (103) of said secondary element (20), thus obtaining a partial password (104), which is sent (114) to the software application (11) of the mobile device (10). The software application (11) running in the mobile device (10) provides to add (115) the identification data or ID codes (105) of the mobile device (10) to the partial password (104), thus unambiguously obtaining (116) a user's temporary personal password (200), which is stored (117) in said mobile device (10) and which is also sent (118) to the secondary element (20) and stored (119) in said secondary element (20). Once the mobile device (10) and the secondary element (20) have stored the user's temporary personal password (200), the software application (11) sends (120) to the third electronic device consisting of one or more remote and/or networked servers (30) the temporary personal password of the user (200), which is stored (121) in the server (30). The same server (30) provides for sending (122) the user's temporary personal password (200) to the fourth electronic device (40) coupled with or integrated into a POS (250) or an electronic lock (350) or a PC Desktop (450) and instantly said personal password is deleted (123).

Furthermore, said fourth electronic device (40) provides for sending its data to the secondary element (10) and/or to the mobile device (10) and receives the data contained in said secondary element (20) and/or in said mobile device (10). In particular, the fourth electronic device (40) requires (124) the temporary personal password (200) to the secondary element (20) and/or to the mobile device (10) and, if obtained (125), compares (126) the two temporary personal passwords (200), respectively coming from the server (30) and from the secondary element (20) and/or from the mobile device (10), to verify if said two passwords are equal. If said two passwords are equal (127), the system validates the strong certification and/or authentication of identity (128) of the user of said mobile device (10), while, if said two passwords are not equal (129), the certification and/or identity authentication is not validated (130) and the system will therefore prevent any other activity, such as a recharge of a financial instrument, a mobile or remote payment, an access to a private property or place or thing with prior authorization of access and/or a user's identification for bureaucratic formalities.

The features of the process/method able to achieve a high security system for authenticating the identity of the owner of a mobile device, such as a smartphone, a tablet or other device, which is coupled with a secondary device (smart device), by sending and receiving a temporary personal password between at least four electronic devices, which is the object of the present invention, are clear from the above description, as well as the advantages of the present invention are also clear.

Moreover, the invention thus conceived and illustrated herein is susceptible of numerous modifications and variations, all of which within the scope of the appended claims. Finally, the components used, so long as they are compatible with the specific use, as well as the dimensions, may be any according to requirements and to the state of the art. Where the characteristics and techniques mentioned in any claim are followed by reference marks, said reference marks have been attached for the sole purpose of increasing the intelligibility of the claims and, consequently, these reference marks do not have any limiting effect on the claims.

## Claims

1. Identity authentication process by sending and exchanging a temporary personal password among at least four electronic devices (10, 20, 30, 40) for recharging, payments, accesses and/or identification activities by a user or owner of one of said electronic devices, according to which the following devices are used:
- a first mobile electronic device (10), such as a smartphone or a tablet;
- a second electronic device or accessory item (20), such as an electronic bracelet or smart device, in which univocal identification data of said user or owner coupled with data relating to said recharging activity, payments, accesses and/or identification activities are stored;
- a third electronic device, such as one or more networked or remote servers (30);
- a fourth electronic device (40) which is coupled or integrated with a further electronic device consisting of a POS (250) or an electronic lock (350) or a PC (450);
- a software application or APP (11) provided by third parties, which manages an exchange of said temporary personal password of said user among said four electronic devices (10, 20, 30, 40);
**characterized in that** said process provides the following steps:
a) detecting said first mobile electronic device (10) by said fourth electronic device (40);
b) producing (113) a temporary random code (102) by said second electronic device (20);
c) coupling said temporary random code (102) with an identification code (103) of said second electronic device (20), so as to create a partial password (104);
d) sending (114) said partial password from said second electronic device (20) to said first mobile electronic device (10);
e) adding (115) identification data (105) of said first mobile electronic device (10) to said partial password (104) by said software application (11) running on said first mobile electronic device (10), so as to univocally obtain (116) a temporary personal password (200) of said user or owner;
f) sending (118) and storing (117, 119) said temporary personal password on said first mobile electronic device (10) and on said second electronic device (20);
g) sending (120) said temporary personal password (200) of the user or owner, by means of said software application (11), to said third electronic device (30), said temporary personal password (200) being stored (121) in said third electronic device (30);
h) sending (122) said temporary personal password (200) of the user or owner (101), by said third electronic device (30), to said fourth electronic device (40) and deleting (123) said temporary personal password (200) from said third electronic device (30);
i) exchanging data between said fourth electronic device (40) and said second electronic device (20) or said first mobile electronic device (10), according to which said fourth electronic device (40) requires (124) said temporary personal password (200) to said second electronic device (20) or to said first mobile electronic device (10) and, once obtained (125), compares (126) the temporary personal passwords (200) respectively coming from said third electronic device (30) and from said second electronic device (20) or said first mobile electronic device (10) to verify if said personal passwords are equal;
j) validating said certification or identity authentication (128) of said user or owner of said first mobile electronic device (10) if (127) said temporary personal passwords (200) respectively coming from said third electronic device (30) and from said second electronic device (20) or said first mobile electronic device (10) are equal;
k) invalidating said certification or identity authentication (129, 130) of said user or owner of said first mobile electronic device (10) if (127) said temporary personal passwords (200) respectively coming from said third electronic device (30) and from said second electronic device (20) or from said first mobile electronic device (10) are not equal.

2. Process according to claim 1, **characterized in that** said step of detecting said first mobile electronic device (10) by said fourth electronic device (40) is performed by sending (110) an identification code (101) of said first mobile electronic device (10) and/or of said user or owner by said first mobile electronic device (10) to said fourth electronic device (40) and by further sending (111) a reply identification code (151) from said fourth electronic device (40) to said first mobile electronic device (10).

3. Process according to claim 1, **characterized in that** said step of detecting said first mobile electronic device (10) by said fourth electronic device (40) is performed by requesting (99), by said fourth electronic device (40) to said first mobile electronic device (10), an identification code (101) of said first mobile electronic device (10).

4. Process according to claim 1, **characterized in that** said step of detecting said first mobile electronic device (10) by said fourth electronic device (40) is performed by sending (111), by means of said fourth device electronic (40), an identification code (151) to said first mobile electronic device (10).

5. Process according to at least one of the claims from 2 to 4, **characterized in that** said identification code (101) of said first mobile electronic device (10) consists of an ID code of said first mobile electronic device (10) or a tax code of said user or owner.

6. Process according to at least one of the previous claims, **characterized in that** said univocal identification data of said user or owner (101) which are stored in said second electronic device (20) are constituted by the tax code of said user or owner.

7. Process according to at least one of the previous claims, **characterized in that** said step of generating (113), by said second electronic device (20), said temporary random code (102) is provided by means of an algorithm or through an encoding generated by biometric information of said user or owner that are detected by said second electronic device (20), such as steps taken by the user or owner or the heartbeat of said user or owner.

8. Process according to at least one of the previous claims, **characterized in that** said recharging activity, said payments, accesses and/or personal identification activities are carried out by financial institutions, manufacturers or suppliers of electronic locks or other public or private institutions.

## Patentansprüche

1. Identitätsauthentifizierungsverfahren durch Senden und Austauschen eines temporären persönlichen Passworts unter mindestens vier elektronischen Vorrichtungen (10,20, 30, 40) für Aufladung, Zahlungen, Zugänge und/oder Identifikationsaktivitäten durch einen Benutzer oder Besitzer einer der elektronischen Vorrichtungen, demgemäß die folgenden Vorrichtungen verwendet werden:
- eine erste mobile elektronische Vorrichtung (10), wie z. B. ein Smartphone oder ein Tablet;
- eine zweite elektronische Vorrichtung oder ein Zubehörteil (20), wie z. B. ein elektronisches Armband oder eine intelligente Vorrichtung, in der bzw. dem eindeutige Identifikationsdaten des Benutzers oder Besitzers gekoppelt mit auf die Aufladeaktivität, Zahlungen, Zugänge und/oder Identifikationsaktivitäten bezogenen Daten gespeichert sind;
eine dritte elektronische Vorrichtung, wie z. B. ein oder mehrere vernetzte oder entfernte Server (30);
- eine vierte elektronische Vorrichtung (40), die mit einer weiteren elektronischen Vorrichtung, die aus einem POS (250) oder einem elektronischen Schloss (350) oder einem PC (450) besteht, gekoppelt oder integriert ist;
- eine von Dritten bereitgestellte Softwareanwendung oder APP (11), die einen Austausch des temporären persönlichen Passworts des Benutzers unter den vier elektronischen Vorrichtungen (10, 20, 30, 40) verwaltet;
**dadurch gekennzeichnet, dass** das Verfahren die folgenden Schritte umfasst:
a) Erkennen der ersten mobilen elektronischen Vorrichtung (10) durch die vierte elektronische Vorrichtung (40);
b) Erzeugen (113) eines temporären Zufallscodes (102) durch die zweite elektronische Vorrichtung (20);
c) Koppeln des temporären Zufallscodes (102) mit einem Identifikationscode (103) der zweiten elektronischen Vorrichtung (20), um ein Teilpasswort (104) zu erstellen;
d) Senden (114) des Teilpassworts von der zweiten elektronischen Vorrichtung (20) an die erste mobile elektronische Vorrichtung (10);
e) Hinzufügen (115) von Identifikationsdaten (105) der ersten mobilen elektronischen Vorrichtung (10) zu dem Teilpasswort (104) durch die Softwareanwendung (11), die auf der ersten mobilen elektronischen Vorrichtung (10) läuft, um so eindeutig ein temporäres persönliches Passwort (200) des Benutzers oder Besitzers zu erhalten (116);
f) Senden (118) und Speichern (117, 119) des temporären persönlichen Passworts auf der ersten mobilen elektronischen Vorrichtung (10) und auf der zweiten elektronischen Vorrichtung (20);
g) Senden (120) des temporären persönlichen Passworts (200) des Benutzers oder Besitzers mittels der Softwareanwendung (11) an die dritte elektronische Vorrichtung (30), wobei das temporäre persönliche Passwort (200) in der dritten elektronischen Vorrichtung (30) gespeichert (121) wird;
h) Senden (122) des temporären persönlichen Passworts (200) des Benutzers oder Besitzers (101) durch die dritte elektronische Vorrichtung (30) an die vierte elektronische Vorrichtung (40) und Löschen (123) des temporären persönlichen Passworts (200) von der dritten elektronischen Vorrichtung (30);
i) Austauschen von Daten zwischen der vierten elektronischen Vorrichtung (40) und der zweiten elektronischen Vorrichtung (20) oder der ersten mobilen elektronischen Vorrichtung (10), gemäß dem die vierte elektronische Vorrichtung (40) das temporäre persönliche Passwort (200) von der zweiten elektronischen Vorrichtung (20) oder der ersten mobilen elektronischen Vorrichtung (10) anfordert (124) und, sobald sie es erhalten hat (125), die temporären persönlichen Passwörter (200) vergleicht (126), die jeweils von der dritten elektronischen Vorrichtung (30) und von der zweiten elektronischen Vorrichtung (20) oder der ersten mobilen elektronischen Vorrichtung (10) kommen, um zu überprüfen, ob die persönlichen Passwörter gleich sind;
j) Bestätigen der Zertifizierung oder Identitätsauthentifizierung (128) des Benutzers oder Besitzers der ersten mobilen elektronischen Vorrichtung (10), wenn (127) die temporären persönlichen Passwörter (200), die jeweils von der dritten elektronischen Vorrichtung (30) und von der zweiten elektronischen Vorrichtung (20) oder der ersten mobilen elektronischen Vorrichtung (10) kommen, gleich sind;
k) Ungültigmachen der Zertifizierung oder Identitätsauthentifizierung (129, 130) des Benutzers oder Besitzers der ersten mobilen elektronischen Vorrichtung (10), wenn (127) die temporären persönlichen Passwörter (200), die jeweils von der dritten elektronischen Vorrichtung (30) und von der zweiten elektronischen Vorrichtung (20) oder von der ersten mobilen elektronischen Vorrichtung (10) kommen, nicht gleich sind.

2. Verfahren nach Anspruch 1, **dadurch gekennzeichnet, dass** der Schritt des Erkennens der ersten mobilen elektronischen Vorrichtung (10) durch die vierte elektronische Vorrichtung (40) durch Senden (110) eines Identifikationscodes (101) der ersten mobilen elektronischen Vorrichtung (10) und/oder des Benutzers oder Besitzers durch die erste mobile elektronische Vorrichtung (10) an die vierte elektronische Vorrichtung (40) und durch weiteres Senden (111) eines Antwortidentifikationscodes (151) von der vierten elektronischen Vorrichtung (40) an die erste mobile elektronische Vorrichtung (10) durchgeführt wird.

3. Verfahren nach Anspruch 1, **dadurch gekennzeichnet, dass** der Schritt des Erkennens der ersten mobilen elektronischen Vorrichtung (10) durch die vierte elektronische Vorrichtung (40) durch Anfordern (99) eines Identifikationscodes (101) der ersten mobilen elektronischen Vorrichtung (10) durch die vierte elektronische Vorrichtung (40) von der ersten mobilen elektronischen Vorrichtung (10) durchgeführt wird.

4. Verfahren nach Anspruch 1, **dadurch gekennzeichnet, dass** der Schritt des Erkennens der ersten mobilen elektronischen Vorrichtung (10) durch die vierte elektronische Vorrichtung (40) durch Senden (111) eines Identifikationscodes (151) an die erste mobile elektronische Vorrichtung (10) mittels der vierten elektronischen Vorrichtung (40) durchgeführt wird.

5. Verfahren nach mindestens einem der Ansprüche 2 bis 4, **dadurch gekennzeichnet, dass** der Identifikationscode (101) der ersten mobilen elektronischen Vorrichtung (10) aus einem ID-Code der ersten mobilen elektronischen Vorrichtung (10) oder einem Steuerkennzeichen des Benutzers oder Besitzers besteht.

6. Verfahren nach mindestens einem der vorstehenden Ansprüche, **dadurch gekennzeichnet, dass** die eindeutigen Identifikationsdaten des Benutzers oder Besitzers (101), die in der zweiten elektronischen Vorrichtung (20) gespeichert werden, durch das Steuerkennzeichen des Benutzers oder Besitzers gebildet werden.

7. Verfahren nach mindestens einem der vorstehenden Ansprüche, **dadurch gekennzeichnet, dass** der Schritt des Generierens (113) des temporären Zufallscodes (102) durch die zweite elektronische Vorrichtung (20) mittels eines Algorithmus oder durch eine Kodierung bereitgestellt wird, die durch biometrische Informationen des Benutzers oder Besitzers erzeugt wird, die durch die zweite elektronische Vorrichtung (20) erkannt werden, wie z. B. Schritte, die der Benutzer oder Besitzer unternimmt, oder der Herzschlag des Benutzers oder Besitzers.

8. Verfahren nach mindestens einem der vorstehenden Ansprüche, **dadurch gekennzeichnet, dass** die Aufladetätigkeit, die Zahlungen, die Zugänge und/oder die persönlichen Identifikationsaktivitäten von Finanzinstituten, Herstellern oder Lieferanten von elektronischen Schlössern oder anderen öffentlichen oder privaten Einrichtungen ausgeführt werden.

## Revendications

1. Processus d'authentification d'identité par envoi et échange d'un mot de passe personnel temporaire entre au moins quatre dispositifs électroniques (10, 20, 30, 40) pour une recharge, des paiements, accès et/ou activités d'identification par un utilisateur ou propriétaire d'un desdits dispositifs électroniques, selon lequel les dispositifs suivants sont utilisés :
- un premier dispositif électronique mobile (10), tel qu'un téléphone intelligent ou une tablette ;
- un deuxième dispositif électronique ou article accessoire (20), tel qu'un bracelet électronique ou dispositif intelligent, dans lequel des données d'identification univoques dudit utilisateur ou propriétaire couplées à des données relatives à ladite activité de recharge, auxdits paiements, accès et/ou activités d'identification sont stockées ;
un troisième dispositif électronique, tel qu'un ou plusieurs serveurs en réseau ou distants (30) ;
- un quatrième dispositif électronique (40) qui est couplé ou intégré avec un autre dispositif électronique consistant en un POS (250) ou un verrou électronique (350) ou un PC (450) ;
- une application logicielle ou APP (11) fournie par des tiers, qui gère un échange dudit mot de passe personnel temporaire dudit utilisateur entre lesdits quatre dispositifs électroniques (10, 20, 30, 40) ;
**caractérisé en ce que** ledit processus fournit les étapes suivantes :
a) la détection dudit premier dispositif électronique mobile (10) par ledit quatrième dispositif électronique (40) ;
b) la production (113) d'un code aléatoire temporaire (102) par ledit deuxième dispositif électronique (20) ;
c) le couplage dudit code aléatoire temporaire (102) avec un code d'identification (103) dudit deuxième dispositif électronique (20), de sorte à créer un mot de passe partiel (104) ;
d) l'envoi (114) dudit mot de passe partiel à partir dudit deuxième dispositif électronique (20) vers ledit premier dispositif électronique mobile (10) ;
e) l'ajout (115) de données d'identification (105) dudit premier dispositif électronique mobile (10) audit mot de passe partiel (104) par ladite application logicielle (11) s'exécutant sur ledit premier dispositif électronique mobile (10), de sorte à obtenir de manière univoque (116) un mot de passe personnel temporaire (200) dudit utilisateur ou propriétaire ;
f) l'envoi (118) et le stockage (117, 119) dudit mot de passe personnel temporaire sur ledit premier dispositif électronique mobile (10) et sur ledit deuxième dispositif électronique (20) ;
g) l'envoi (120) dudit mot de passe personnel temporaire (200) de l'utilisateur ou propriétaire, au moyen de ladite application logicielle (11), audit troisième dispositif électronique (30), ledit mot de passe personnel temporaire (200) étant stocké (121) dans ledit troisième dispositif électronique (30) ;
h) l'envoi (122) dudit mot de passe personnel temporaire (200) de l'utilisateur ou propriétaire (101), par ledit troisième dispositif électronique (30), audit quatrième dispositif électronique (40) et l'effacement (123) dudit mot de passe personnel temporaire (200) dudit troisième dispositif électronique (30) ;
i) l'échange de données entre ledit quatrième dispositif électronique (40) et ledit deuxième dispositif électronique (20) ou ledit premier dispositif électronique mobile (10), selon lequel ledit quatrième dispositif électronique (40) requiert (124) ledit mot de passe personnel temporaire (200) destiné audit second dispositif électronique (20) ou audit premier dispositif électronique mobile (10) et, une fois obtenu (125), compare (126) les mots de passe personnels temporaires (200) provenant respectivement dudit troisième dispositif électronique (30) et dudit deuxième dispositif électronique (20) ou dudit premier dispositif électronique mobile (10) pour vérifier si lesdits mots de passe personnels sont identiques ;
j) la validation de ladite certification ou authentification d'identité (128) dudit utilisateur ou propriétaire dudit premier dispositif électronique mobile (10) si (127) lesdits mots de passe personnels temporaires (200) provenant respectivement dudit troisième dispositif électronique (30) et dudit deuxième dispositif électronique (20) ou dudit premier dispositif électronique mobile (10) sont identiques ;
k) l'invalidation de ladite certification ou authentification d'identité (129, 130) dudit utilisateur ou propriétaire dudit premier dispositif électronique mobile (10) si (127) lesdits mots de passe personnels temporaires (200) provenant respectivement dudit troisième dispositif électronique (30) et dudit deuxième dispositif électronique (20) ou dudit premier dispositif électronique mobile (10) ne sont pas identiques.

2. Processus selon la revendication 1, **caractérisé en ce que** ladite étape de détection dudit premier dispositif électronique mobile (10) par ledit quatrième dispositif électronique mobile (40) est réalisée par l'envoi (110) d'un code d'identification (101) dudit premier dispositif électronique mobile (10) et/ou dudit utilisateur ou propriétaire par ledit premier dispositif électronique mobile (10) audit quatrième dispositif électronique (40) et par l'envoi supplémentaire (111) d'un code d'identification de réponse (151) à partir dudit quatrième dispositif électronique (40) vers ledit premier dispositif électronique mobile (10).

3. Processus selon la revendication 1, **caractérisé en ce que** ladite étape de détection dudit premier dispositif électronique mobile (10) par ledit quatrième dispositif électronique (40) est réalisée par la demande (99), par ledit quatrième dispositif électronique (40) audit premier dispositif électronique mobile (10), d'un code d'identification (101) dudit premier dispositif électronique mobile (10).

4. Processus selon la revendication 1, **caractérisé en ce que** ladite étape de détection dudit premier dispositif électronique mobile (10) par ledit quatrième dispositif électronique (40) est réalisée par l'envoi (111), au moyen dudit quatrième dispositif électronique (40), d'un code d'identification (151) vers ledit premier dispositif électronique mobile (10).

5. Processus selon au moins une des revendications 2 à 4, **caractérisé en ce que** ledit code d'identification (101) dudit premier dispositif électronique mobile (10) consiste en un code d'ID dudit premier dispositif électronique mobile (10) ou un code fiscal dudit utilisateur ou propriétaire.

6. Processus selon au moins une des revendications précédentes, **caractérisé en ce que** lesdites données d'identification univoques dudit utilisateur ou propriétaire (101) qui sont stockées dans ledit deuxième dispositif électronique (20) sont constituées par le code fiscal dudit utilisateur ou propriétaire.

7. Processus selon au moins une des revendications précédentes, **caractérisé en ce que** ladite étape de génération (113), par ledit deuxième dispositif électronique (20), dudit code aléatoire temporaire (102) est fournie au moyen d'un algorithme ou par le biais d'un codage généré par des informations biométriques dudit utilisateur ou propriétaire qui sont détectées par ledit deuxième dispositif électronique (20), telles que des étapes effectuées par l'utilisateur ou propriétaire ou le pouls dudit utilisateur ou propriétaire.

8. Processus selon au moins une des revendications précédentes, **caractérisé en ce que** ladite activité de recharge, lesdits paiements, accès et/ou activités d'identification personnelle sont réalisés par des institutions financières, fabricants ou fournisseurs de verrous électroniques ou autres institutions publiques ou privées.
